# EUROPEAN PATENT SPECIFICATION

(11) **EP 2 946 674 B1**
(45) Date of publication and mention of the grant of the patent: **20.03.2019**
(21) Application number: 14740751.4
(22) Date of filing: 16.01.2014
(51) Int. Cl.: A23L 7/113

(54) **METHOD FOR MANUFACTURING INSTANT NOODLE**
VERFAHREN ZUR HERSTELLUNG VON INSTANTNUDELN
PROCÉDÉ DE FABRICATION DE NOUILLES INSTANTANÉES

(30) Priority: 16.01.2013 JP 2013005820
(43) Date of publication of application: 25.11.2015
(73) Proprietor: Sanyo Foods Co., Ltd., Minato-ku, Tokyo 107-0052 (JP)
(72) Inventor: NAGAYAMA, Yoshiaki, Maebashi-shi Gunma 371-0811 (JP); ISHIDA, Nozomu, Maebashi-shi Gunma 371-0811 (JP); KOMAGATA, Hideki, Maebashi-shi Gunma 371-0811 (JP)
(74) Representative: Krauns, Christian
(86) International application number: PCT/JP2014/050715
(87) International publication number: WO 2014/112565

(56) References cited:
- WO-A1-2012/002540
- WO-A1-2012/002540
- JP-A- S5 332 142
- JP-A- S5 332 142
- JP-A- S5 571 462
- JP-A- S5 995 854
- JP-A- S5 995 854
- JP-A- S6 037 945
- JP-A- S6 037 945
- JP-A- H10 155 444
- JP-A- H10 155 444
- JP-A- H10 276 698
- JP-A- S52 128 251
- JP-A- S52 128 251
- JP-A- S59 173 060
- JP-A- S59 173 060
- JP-A- 2000 210 041
- US-A1- 2012 207 897

## Description

### Technical Field

The present invention relates to a process for producing instant noodles, wherein raw noodles are dried with a high-temperature hot air, without steam-cooking to such raw noodles. More specifically, the present invention relates to a process for producing a hot-air-dried instant noodle, wherein when raw noodles are not steam-cooked but is dried with a high-temperature hot air for a short time; more excellent taste/texture than before can be obtained.

### Background Art

These days, the consumer trend may be to prefer a "genuine or orthodox" instant noodle in the daily life. For example, the demand imposed by the consumer on an instant Chinese noodle may be becoming severe, including not only handiness but also more genuine or orthodox texture than before or more genuine or orthodox appearance than before. In order to meet such a wide variety of current consumer demands, respective companies are competing ruthlessly and innovating the instant noodle technology.

Generally, in the process of producing an instant noodle, various auxiliary raw materials may be blended with wheat flour as a main raw material, the mixture may be subjected to kneading by a mixer, etc., noodle making in the usual manner, and steam cooking, and thereafter, a fried noodle or a non-fried noodle, i.e., a noodle not fried in oil, may be obtained by a predetermined drying method. In the case of a non-fried noodle, a drying method such as hot-air drying, microwave drying, freeze drying and cold drying may be employed.

In addition, a technique of performing a drying treatment without steam-cooking to noodle strips which is obtained by using conventional noodle making method may also be known. That is, a drying treatment may be performed still in raw noodle strips state (Patent Document 1 (JP-B (Japanese Examined Patent Publication; KOKOKU) No. 54-44731), Patent Document 2 (JP-A (Japanese Unexamined Patent Publication; KOKAI) No. 59-173060), Patent Document 3 (JP-B No. 56-26382)).

These methods may involve performing a drying treatment without steam-cooking raw noodle strips and may be substantially the same production process as the process for producing a so-called dried noodle but may be characterized in that the temperature of hot air used at the time of drying treatment is high, compared with the process for producing an ordinary dried noodle. More specifically, these methods may be a production process wherein in contrast with the hot air temperature (around 50°C) for an ordinary dried noodle, hot air at 100°C or more is used and since a drying treatment in a short time and heating at a temperature not less than the boiling point of water become possible, the internal structure of a noodle strip can be made porous while effecting gelatinization of starch inside the noodle strip. Therefore, it has been supposed that the gelatinization degree of the noodle strip may be characteristically high, compared with the conventional dried noodle, and thanks to a porous internal structure of the noodle strip after drying, a noodle strip reduced in the restoration time may be obtained.
The Japanese patent application JP H10 155 444 A discloses performing a hot blast drying without generating a scorch or the like by ventilating a hot blast whose temperature and flow speed are controlled in the axial direction of a straightening cylinder and passing it through the noodle lump fed inside the almost cylindrical straightening cylinder. The noodle lump is fed onto an air permeable noodle receiving plate inside the straightening cylinder and sufficiently loosened and air inside a lower side chamber is sucked to a negative pressure by a centrifugal fan and sent through a steam humidifier, a heater and a straightening plate to an upper side chamber. The air, the speed and the temperature are measured in a differential pressure detector and a temperature detector and it is ventilated in the axial direction inside the straightening cylinder at the prescribed speed and the prescribed temperature by the centrifugal fan and the heater and passed through the noodle lump.
The international patent application WO 2012/002540 A1 discloses dry noodles which have a porosity in the cross sectional area of a noodle filament of 0.1 to 15 % inclusive, a unit porosity in the cross sectional area of a noodle filament of 0.01 to 1 % inclusive, a degree of gelatinization of 30 to 75 % and a porous structure.

However, in recent years, the consumer demand directed at "genuine or orthodox" goods in the daily life may know no boundaries. In turn, the demand further imposed by the consumer on the instant noodle (for example, a requirement for sensory properties such as taste/texture) may be also becoming increasingly strenuous at present.

### Prior Art Documents

### Patent Documents

Patent Document 1: JP-B No. 54-44731
Patent Document 2: JP-B No. 59-173060
Patent Document 3: JP-B No. 56-26382
Patent Document 4: JP H10 155 444 A
Patent Document 5: WO 2012/002540 A1

### Summary of Invention

### Problem to be Solved by the Invention

An object of the present invention is to provide a process for producing an instant noodle capable of responding to the "increasingly strenuous demand" from the consumer in these days.

More specifically, an object of the present invention is to provide a process for producing a hot-air-dried instant noodle, wherein even in an instant noodle of a conventional type performing a high-temperature hot-air drying treatment without steam-cooking raw noodle strips, more excellent taste/texture than before can be obtained.

### [Means for Solving the Problem]

The present invention provides a process for producing hot-air-dried instant noodles as set forth in the appended claims.

The present inventors have found that it is highly effective for attaining the above-described object to subject raw noodle strips to high-temperature hot-air drying under humidity-control by using hot air at specific ranges of humidity and temperature. The process for producing a hot-air-dried instant noodle of the present invention is based on this finding, more specifically, is characterized in that raw noodle strips produced from a main raw material containing at least wheat flour and starch is shaped and after filling, the raw noodle strips are subjected to humidity-control and high-temperature hot-air drying by using hot air at a humidity of 10.7 kPa to 40.0 kPa (80 mmHg to 300 mmHg) and a temperature of 110 to 150°C.

According to the present invention having the above-described configuration, wheat flour and starch are used as the main raw material and a high-temperature hot air treatment is performed under humidity-control, so that a drying treatment can be carried out in a state of the gelatinization of starch on the noodle strip surface being appropriately increased, compared with the conventional production process. Therefore, reduction in the taste/texture due to a high-temperature hot air treatment (which cannot be avoided in conventional techniques) can be effectively prevented. As a result, the taste/texture can be further improved, as compared with that in the prior art.

On the other hand, in the conventional technique of performing a high-temperature drying treatment without steam-cooking to raw noodle strips, there was no process for producing a hot-air-dried instant noodle, characterized in that raw noodle strips produced from a main raw material containing at least wheat flour and starch is shaped and after filling, the raw noodle strips are subjected to humidity-control and high-temperature hot-air drying by using hot air at a humidity of 10.7 kPa to 40.0 kPa (80 mmHg to 300 mmHg) and a temperature of 110 to 150°C.

To the knowledge and findings of the present inventors, the reason why an instant noodle having good sensory properties (e.g., taste/texture) unobtainable by conventional techniques is obtained in the present invention may be presumed as follows.

That is, the present inventors have found from extensive comparative experiments that, for example, in the methods (Patent Documents 1, 2 and 3) of conventional techniques, raw noodle strips are treated "directly" with high-temperature hot air and therefore, the surface gelatinization of a noodle strip after drying tends to be "subtly" insufficient.

Furthermore, to the knowledge of the present inventors, it has also been found from extensive comparative experiments of the present invention that in the conventional method, high-temperature hot air is blown directly to raw noodle strips and therefore, the tendency to cause hardening of the noodle strip surface in the very early stage of drying is prominent. The texture of the eventually obtained noodle strip may be presumed to have resulted in a resilient surface texture or an excessively chewy eating texture.

On the other hand, according to the present invention, both "insufficient surface gelatinization of a noodle strip after drying" and "excessive chewiness at the time of eating", which are "latent defects" of an instant noodle obtained through the above-described conventional high-temperature hot-air drying, may be solved and in turn, it may be expected that a hot-air dried instant noodle having good sensory properties (for example, taste/texture) is obtained.

The present invention may include, for example, the following embodiments.
[1] A process for producing hot-air-dried instant noodle, comprising:
   producing raw noodle strips from a main raw material containing at least wheat flour and starch;
   putting the raw noodle strips in a drying retainer, without steam-cooking the raw noodle strips; and
   drying the raw noodle strips by using hot air at a temperature range from 110 to 150°C with humidity-control, wherein the humidity-control is carried out at an absolute humidity from 10.7 kPa to 40.0 kPa (from 80 mmHg to 300 mmHg).
[2] The process for producing hot-air-dried instant noodle according to [1], wherein the difference (α_{W}-α_{D}) between gelatinization degrees α_{W} and α_{D} is in a range from 0.1 to 15,
   wherein the α_{W} is a gelatinization degree which is measured from a block of noodle strips which is dried the raw noodle strips by using hot air at a temperature range from 110 to 150°C with humidity-control, wherein the humidity-control is carried out at an absolute humidity from 10.7 kPa to 40.0kPa (from 80 mmHg to 300 mmHg); and
   the α_{D} is a gelatinization degree which is measured from a block of noodle strips which is dried the raw noodle strips by using hot air at a temperature range from 110 to 150°C without humidity-control.
[3] The process for producing hot-air-dried instant noodle according to [1] or [2], wherein the starch is blended in a ratio of 10 to 35 mass% in the main raw material.
[4] The process for producing hot-air-dried instant noodle according to any one of [1] to [3], wherein the wheat flour and starch are first subjected to a mixing treatment, and water is added in a ratio of 35 to 45% of the total amount of the wheat flour and starch, at the time of the mixing treatment.
[5] The process for producing hot-air-dried instant noodle according to any one of [1] to [4], wherein a second drying treatment is conducted by using hot air at a temperature range from 80 to 120°C with a second humidity-control, wherein the second humidity-control is carried out at an absolute humidity from 1.3 kPa to 13.3 kPa (from 10 mmHg to 100 mmHg).
[6] The process for producing hot-air-dried instant noodle according to any one of [1] to [5], wherein the starch is selected from raw starches of sweet potato starch, tapioca starch, potato starch, and waxy corn starch; or from etherified and esterified starches which have been derived from these raw starches as a raw material therefor.

### Effect of the Invention

As described above, according to the present invention, a hot-air-dried instant noodle excellent in the sensory properties may be obtained.

By the way, in the process for producing a dried noodle (**"KANMEN" in Japanese, which is not an instant noodle, but is a dried noodle which is produced by drying raw noodle on poles in the air**), the problems of split or crack of noodle strips are prevented by using humidity-control.

Therefore, the problems may also be solved to a certain extent, by the humidity-control and high-temperature drying at the case of dried instant noodle in the present invention.

### Brief Description of Drawings

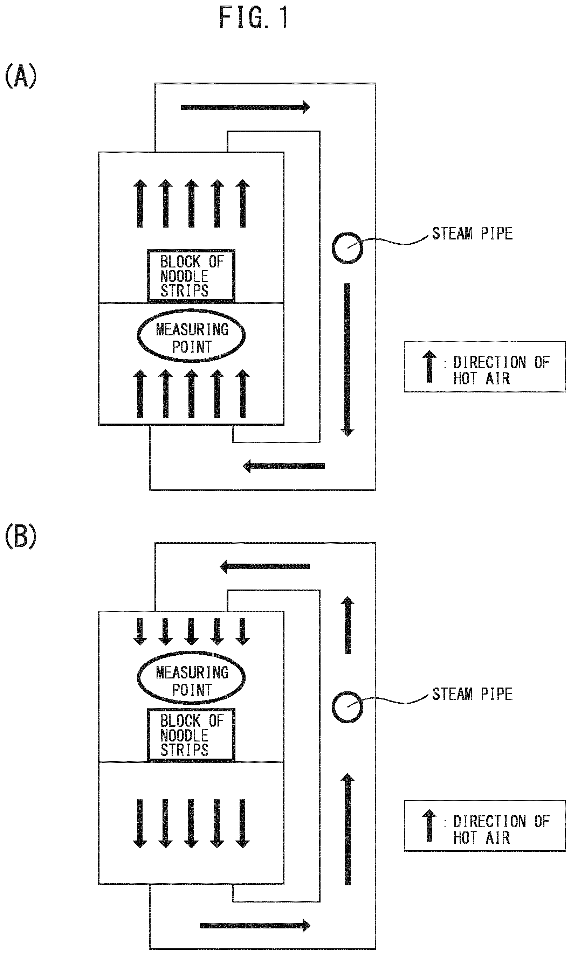

Fig. 1 is a schematic cross-sectional view illustrating an example of the apparatus system for carrying out a high-temperature hot-air drying step under humidity-control according to the present invention. Fig. 1(A) depicts a measuring point in respective conditions of humidity and hot air when the hot air is blown to a block of noodle strips from bottom to top (upward). Fig. 1(B) depicts a measuring point in respective conditions of humidity and hot air when the hot air is blown to a block of noodle strips top to bottom (downward).

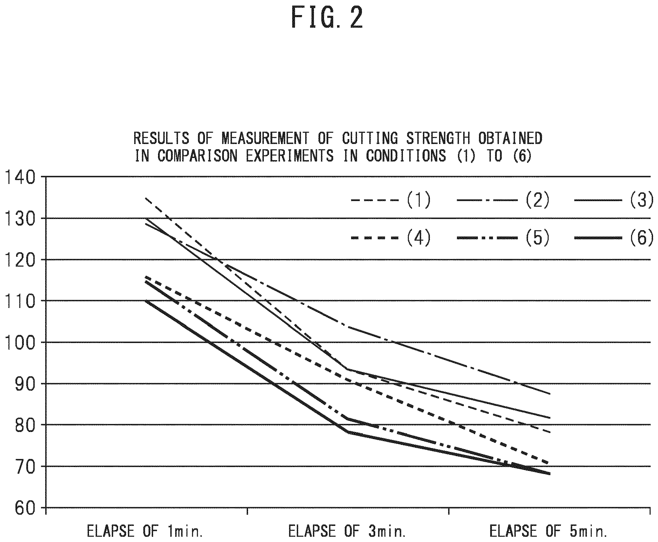

Fig. 2 is a graph showing the results of measurement of cutting strength of comparison experiments in the conditions (1) to (6), obtained in an example of the present invention. The unit on the ordinate of Fig. 2 is gram.

### Modes for Carrying Out the Invention

Hereinbelow, the present invention will be described in detail, with reference to the accompanying drawings as desired. In the following description, "%" and "part(s)" representing a quantitative proportion or ratio are those based on mass, unless otherwise specifically noted.

### (High-Temperature Hot-Air Drying Under Humidity-Control)

The present invention is characterized in that raw noodle strips are subjected to high-temperature hot-air drying under humidity-control. In the step other than this "humidity-control and high-temperature hot-air drying", a step conventionally known in the field of hot-air-dried instant noodle can be used without any particular limitation.

### (Instant Noodle)

The "instant noodle" or "hot-air-dried instant noodle" as used in the present invention may be any of, for example, a so-called boiling type and a type that is cooked by pouring hot water. In view of taste/texture and hot-water reconstitution time, the present invention may be more suitably usable for a boiling type.

### (Material of Noodle)

In the present invention, the material of a noodle may not be particularly limited. That is, a material conventionally employed in the production of an instant noodle can be used without any particular limitation. More specifically, for example, a main raw material and an auxiliary raw material described in Shin-Sokusekimen Nyuumon (New Guide to Instant Noodle), supervised by Convenience Foods Industry Association of Japan and issued by Japan Food Journal Co., Ltd. (1998), pp. 52-62, can be used in the present invention without any particular limitation.

### (Main Raw Material)

As the main raw material for use in the present invention (hereinafter, in the description of the present invention, sometimes referred to as "flour raw material"), wheat flour and starch are used. In the process for producing the present invention, if starch is not used as a main raw material, the gelatinization degree at the time of high-temperature hot-air drying may tend to decrease and only an improper noodle, for example, requiring a long hot water reconstitution time can be obtained.

### (Wheat Flour)

The "wheat flour" as a main raw material that can be suitably used in the present invention may include, for example, wheat flour such as ASW (Australian medium white wheat, protein content: around 10%) and HRW (American hard red wheat, protein content: around 11%).

### (Starch)

With regard to the "starch" as a main raw material that can be suitably used in the present invention, for example, sweet potato starch, potato starch, tapioca starch, waxy corn starch, corn starch, and wheat starch may be used. Various "processed starches" obtained using the protein above as the raw material, such as etherified starch, esterified starch, crosslinked starch and acid-modified starch, may also be suitably used in the present invention. In order to obtain the effect of the present invention at a higher level, a raw starch, e.g., tapioca starch, potato starch or waxy corn starch, or an etherified starch or esterified starch using such a raw starch as a raw material may be preferably used.

### (Suitable Starch)

In the present invention, the tapioca starch, potato starch and waxy corn starch may be characterized in that since the gelatinization initiation temperature is low compared with wheat flour and the amount of water absorption is large, gelatinization readily occurs at the time of high-temperature hot-air drying. In addition, those characteristics may also be further enhanced by processing the tapioca starch, potato starch or waxy corn starch through etherification or esterification. The preparation method of these starches and the degree of processing thereof may not be particularly limited, but a starch using an etherified or esterified starch prepared from, as a raw material, potato starch, tapioca starch or waxy corn starch may be preferably used. As the etherified starch, hydroxypropyl starch may be preferred, and as the esterified starch, acetate starch, phosphate starch and octenylsuccinate starch may be preferred. In the case of using a moderately or highly crosslinked starch, the texture may tend to be chewy. Therefore, when using a moderately or highly crosslinked starch in the present invention, another element may be preferably adjusted (for example, decreasing the protein amount of wheat flour) so as to obtain the effect expected in the present invention.

### (Amount Added of Starch)

The amount added of starch may be preferably from 10 to 35 mass%, more preferably from 15 to 30 mass%, relative to the wheat flour. If the amount added of starch is small, the degree of gelatinization during high-temperature hot-air drying may be likely to decrease, and the hot-water reconstitution at the time of eating may tend to be poor, resulting in a powdery texture. On the other hand, if the amount added of starch is large, there may be a tendency that the obtained dough sheet is sticky and the workability is deteriorated to reduce the production efficiency.

### (Auxiliary Raw Material)

In the present invention, the usable auxiliary raw material may not be particularly limited. The auxiliary raw material that can be used in the present invention may include lye water, phosphate, salt, polysaccharide thickener, egg, gluten, etc.

### (Process for producing Noodle)

The process for producing "noodle", which can be used in the present invention, may not be particularly limited, except for shaping raw noodle strips and after filling, subjecting it to humidity-control and high-temperature hot-air drying. In a preferred embodiment of the present invention, for example, wheat flour and starch may be used as the main raw material and mixed in the usual manner to prepare dough, the dough may be compounded/rolled and then slit into raw noodle strips by means of a cutting blade, and after shaping the raw noodle strips for one meal in a retainer (basket) and filling the retainer, the raw noodle strips may be subjected to humidity-control and high-temperature hot-air drying by using hot air at a humidity of 80 to 300 mmHg and a temperature of 110 to 150°C, whereby an expanded and dried noodle excellent in the taste/texture and restorability can be obtained.

The production process (respective steps) of the "noodle" usable in a preferred embodiment of the present invention will be described below.

### <Dough Preparation Step>

In the noodle-making method, wheat flour and starch may be used as the main raw material and after blending, if desired, gluten, etc., kneaded with water and an auxiliary raw material including common salt, lye water, etc. by a mixer to prepare dough. In order to obtain the effect of the present invention, the percentage of water added (amount of water used relative to the flour raw material) may be preferably from 35 to 45%. This may be a water content necessary for increasing the gelatinization degree inside a noodle strip and if the water content is small (lower than 35%), the gelatinization of a noodle strip after drying may tend to be insufficient, leading to hard and powdery texture at the time of eating.

### <Slitting Step>

A thinly rolled dough sheet prepared by rolling the obtained dough by roll-rolling may be continuously slit by a cutting blade device.

### <Disposing Step>

The raw noodle strips obtained by the above-described technique may be cut into a weight corresponding to one meal. The cut raw noodle strips are set in a drying-retainer (basket).The raw noodle strips in the drying-retainer are treated by humidity-control and high-temperature hot-air drying to expand and dry the noodle strip, whereby the desired block of noodle strips (instant noodle) can be obtained.

The humidity-control and high-temperature hot-air drying step in the present invention will be described below.

### <Humidity-Control and High-Temperature Hot-Air Drying Step>

The humidity-control and high-temperature hot-air drying step of the present invention is characterized in that raw noodle strips are subjected to humidity-control and high-temperature hot-air drying by using hot air at a humidity of 10.7 kPa to 40.0 kPa (80 mmHg to 300 mmHg) and a temperature of 110 to 150°C (details of the methods for measuring the humidity and temperature in the "humidity-control and high-temperature hot-air drying step" will be described later).

### (Humidity)

In the humidity-control and high-temperature hot-air drying step of the present invention, if the humidity at the time of drying is less than 10.7 kPa (80 mmHg), the humidity (water) applied to the noodle strip surface may fall short and the noodle strip surface portion cannot be prevented from hardening (denaturation). On the other hand, if the humidity exceeds 40.0 kPa (300 mmHg), the block of noodle strips may contract due to excessively high humidity, resulting in deterioration of the drying efficiency, and at the same time, the noodle strip surface may be excessively gelatinized to cause too much strong binding between noodle strips, leading to poor unfastening of a block of noodle strips at the time of eating. In the present invention, the unit of humidity is a unit in terms of absolute humidity, and, for example, the absolute humidity "125°C, 13.3 kPa (100 mmHg)" may be read, in terms of relative humidity, as "about 5.7% at 125°C". As for this absolute humidity-relative humidity conversion, the conversion can be performed using the formula of "Appendix-2" in the instruction manual (issued on November, 1992, first edition) of the hygrometer (Yamatake Corp., trade name: AVS300) used. Assuming 30°C and 70% RH (relative humidity), the changes in the relative humidity and absolute humidity when the temperature is raised to 110°C and 150°C are calculated below.

For reference, the values of saturated water vapor pressure at respective temperatures (30°C, 110°C and 150°C) are shown together.

| <Temperature> | <Saturated Water Vapor Pressure> | <Relative Humidity> | <Absolute Humidity> |
|---|---|---|---|
| 30°C | 32 mmHg (4245 Pa) | 70% RH | 22 mmHg (2971 Pa) |
| 110°C | 1074 mmHg (143186 Pa) | 2% RH | 22 mmHg (2971 Pa) |
| 150°C | 3568 mmHg (475686 Pa) | 0.6% RH | 22 mmHg (2971 Pa) |

### (Drying Temperature)

In the humidity-control and high-temperature hot-air drying step of the present invention, if the drying temperature is less than 110°C, this may lead to a tendency that expansion of noodle strips is insufficient and at the same time, the gelatinization degree is low. On the other hand, if the drying temperature exceeds 150°C, it may be likely that the noodle strips partially burns and its commercial value are impaired.

### (Suitable Conditions of Humidity-Control and High-Temperature Drying)

In the present invention, the humidity of hot air may be preferably from 12.0 kPa to 26.7 kPa (from 90 mmHg to 200 mmHg), more preferably from 13.3 kPa to 24.0 kPa (from 100 mmHg to 180 mmHg), still more preferably from 13.3 kPa to 20.0 kPa (from 100 mmHg to 150 mmHg), yet still more preferably of a saturated water vapor pressure from 14.7 kPa to 20.0 kPa (from 110 mmHg to 150 mmHg). The temperature of hot air may be preferably from 110 to 140°C, more preferably from 115 to 130°C. After the humidity-control and high-temperature hot-air drying, a second drying treatment may be provided. In the second drying treatment, the humidity may be preferably from 10 to 100 mmHg, and the temperature may be preferably from 80 to 120°C. The drying may be preferably performed using such hot air so that the final water content of a block of noodle strips can become from 6 to 14%.

### (Wind Speed)

If the wind speed at the time of humidity-control and high-temperature hot-air drying is less than 1 m/S, successful permeation of air through a block of raw noodle strips can hardly be achieved, and unevenness of drying may be likely to occur. On the other hand, if the wind speed exceeds 15 m/S, a tendency to require too much energy from the industrial viewpoint may be produced.

### (Suitable Gelatinization degree)

In the present invention, a gelatinization degree which is measured from a block of noodle strips which is obtained by using above the humidity-control and high-temperature drying step is defined as "α_{W}". Another gelatinization degree which is measured from another block of noodle strips which is obtained by using same conditions in the step above except without using humidity-control is defined as "α_{D}". As described above, a suitable gelatinization degree may be preferably obtained by controlling temperature and humidity. More specifically, the α_{W} may be preferably from 50 to 60%, more preferably from 51 to 58% (particularly from 51 to 57%) .

The difference between α_{W} and α_{D} (i.e., α_{W}-α_{D}) may be preferably +15% or less in view of drying-efficiency and unfastening at the time of eating. The difference (α_{W}-α_{D}) may be more preferably 10% or less (particularly 8% or less). If the (α_{W}-α_{D}) exceeds 15% (if the gelatinization degree is increased), contraction of a block of noodle strips may be likely to occur, giving rise to problems of poor permeation of hot air and poor drying. When the contraction percentage of the block of noodle strips is increased, unfastening at the time of eating may also tend to be unsuccessful.

In view of the effects of the present invention, the (α_{W}-α_{D}) may be preferably 0.1% or more. The (α_{W}-α_{D}) may be more preferably 0.5% or more (particularly 0.8% or more).

In view of resolution of sensory problems at the time of eating, such as "resilient surface of noodle strip" and "excessive chewiness", which may be one of the effects of the present invention, fundamentally, humidity-control and high-temperature hot air must be blown from the very early stage of drying. More specifically, the present inventors have found (see, later-described Examples) that when the noodle strips is started to dry without humidity-control in very early stage of drying, the hardening (denaturation) of the surface of noodle strips may be started. Thus, when the drying with humidity-control is carried out in late stage of drying, the hardening (denaturation) cannot restore. Therefore, unless humidity-control and high-temperature hot air is blown immediately after putting the raw noodle strips into a dryer, the effects of the present invention cannot be expected. In addition, when humidity is conditioned to a certain extent in the initial stage of drying, it may also be possible to gradually decrease the degree of humidity-control. Wasted energy can also be reduced by decreasing the amount of humidity-control in the middle of drying. However, a lag at an error level in respect of "blowing of humidity-control and high-temperature hot air" may be allowed in the present invention. The "lag at an error level" may be preferably 10 seconds or less, more preferably 5 seconds or less.

### (Measurement Point for Respective Conditions of Humidity and Hot Air)

The humidity-control and hot-air drying machine that should be used in the present invention may not be particularly limited. In Fig. 1(A) and Fig. 1(B), humidification may be performed by the steam pipe shown. In addition, respective conditions of humidity/hot air temperature and wind speed in the present invention may be preferably measured at the points shown in Fig. 1 (i.e., between hot-air-supplying-port and the blocks of noodle strips). For example, when the hot air is blown to a retainer from bottom to top (upward) as shown in Fig. 1(A), the humidity may be preferably measured on the lower side of the retainer. On the other hand, when the hot air is blown to a retainer from top to bottom (downward) as shown in Fig. 1(B), the humidity may be preferably measured on the upper side of the retainer.

### (Method for Adjusting Humidity)

The method for adjusting the humidity in the humidity-control and high-temperature hot-air drying of the present invention may not be particularly limited. In the present invention, various methods, for example, a method of feeding steam to hot air to increase the humidity or a method of spraying water on hot air to increase the humidity, can be suitably used.

### (Direction of Hot Air)

The direction of hot air relative to the retainer in the present invention may not be particularly limited. The direction of hot air may be varied as needed (i.e., when multiple of dryer is used, "a dryer which is carried out upward-hot-air" or "other dryer which is carried out downward-hot-air" can be combined as necessary). In an embodiment of the present invention wherein the direction of hot air is variable, for example, in view of drying efficiency of a block of noodle strips, the hot air may be preferably blown to the retainer from bottom to top (upward) at least in the initial stage of drying. On the other hand, after the initial stage of drying, the hot air may be blown to the retainer from bottom to top (upward), or conversely, the hot air may be blown to the retainer from top to bottom (downward). Furthermore, it may be preferable that after the initial stage of drying, hot air from top to bottom (downward) and hot air from bottom to top (upward), are alternately blown to the retainer at a regular interval, if desired.

### (Temperature, Humidity and Wind Speed Gauges)

The gauges for measuring respective conditions, used in the present invention, are as follows.
Thermometer:
   Toyo Netsukagaku Co., Ltd., trade name: TR-8
Hygrometer:
   Yamatake Corp., trade name: AVS300
Anemometer:
   Testo K.K., trade name: 06359640 (vane type)

### (Degree of Contraction)

In the present invention, an outer diameter of a block of raw noodle strips which is immediately before being subjected to the "humidity-control and high-temperature hot-air drying step" is defined as "D₁". The other outer diameter of a block of raw noodle strips which is immediately after being subjected to the "humidity-control and high-temperature hot-air drying step" is defined as "D₂". The degree of contraction of a block of noodle strips may be preferably reduced as much as possible. More specifically, the "percentage of retention of outer diameter" in the D₂, i.e., R_{D}=100× (D₂/D₁) (%) may be preferably 95% or more. The percentage of retention R_{D} of outer diameter may be more preferably 96% or more, still more preferably 97% or more (particularly 98% or more).

Hereinbelow, the present invention will be described in more detail with reference to Examples.

### [Examples]

### Example A1

The effect of the humidity-control and high-temperature hot-air drying was confirmed by the following test.

### <Production of Noodle Strips>

### Ingredients:

8 kg of wheat flour (ASW, protein content: 9.5%), 2 kg of esterified tapioca starch (trade name: Sakura II, Matsutani Chemical Industry Co., Ltd.), 150 g of common salt, 50 g of lye water (sodium carbonate solution), and 3,800 ml of water.

### Production:

The ingredients are mixed and kneaded.

The kneaded mixture of ingredients is formed into dough-sheet.

The dough-sheet is slit into raw noodle strips by using a cutting blade (No.18, square shape), wherein the raw noodle strips have a thickness of 1.4mm and a width of 1.7mm.

120 g of the raw noodle strips are set into drying-retainer, wherein the drying-retainer has a diameter of 125 mm and Teflon-coated.

The raw noodle strips in drying-retainer is dried with hot air at 125°C, wherein a wind speed of the hot air is 5m/s and the drying is carried out with further following "7 kinds of conditions".
In the result of above process, the hot-air-dried instant noodle having around 10% in water-content is made.

Comparative tests were performed by using the following 7 kinds of conditions as the condition of humidity-control and high-temperature hot-air drying.

### (7 Kinds of Conditions)

(1) no humidity-control drying for 300 seconds
(2) humidity-control at 6.67 kPa drying for 300 seconds (50 mmHg)
(3) humidity-control at 13.3 kPa drying for 300 seconds (100 mmHg)
(4) humidity-control at 26.7 kPa drying for 300 seconds (200 mmHg)
(5) humidity-control at 40.0 kPa drying for 330 seconds (300 mmHg)
(6) humidity-control at 53.3 kPa drying for 360 seconds (400 mmHg)
(7) [first drying] humidity -control at 400 mmHg and drying for 60 seconds + [second drying] no humidity-control and drying for 260 seconds

In the condition (1), the humidity was increased to a maximum of 2.67 kPa (20 mmHg) due to water content evaporated from the block of raw noodle strips but since the humidity was not increased by adding steam, the condition of humidity-control was indicated as "no humidity-control".

### <Measurement of Water Content>

The water content was measured as follows.

### Electric dryer:

Yamato Scientific Co., Ltd., trade name: DN-41 2 g of the obtained noodle strip was dried at 105°C for 2 hours in an electric dryer, and the volume of water was measured from the difference in weight between before and after drying.

### <Measurement of Gelatinization degree>

As for the measurement method of the gelatinization degree of the present invention, the measurement was performed by the glucoamylase second method. For details of the "glucoamylase second method", the "measurement method of gelatinization degree (gelatinization degree)" of Japan Food Research Laboratories (http://www.jfrl.or.jp/item/nutrition/post-35.html) may be referred to, if desired.

### <Degree of Contraction>

The contraction degree of a block of noodle strips in the present invention was evaluated by the percentage of retention of D₂ against D₁ ; i.e., R_{D}=100× (D₂/D₁) (%). D1 is an outer diameter of a block of raw noodle strips which is immediately before being subjected to the "humidity-control and high-temperature hot-air drying step". D2 is another outer diameter of a block of raw noodle strips which is immediately after being subjected to the "humidity-control and high-temperature hot-air drying step". In all of the data of Table 1 below, D₁=125 mm.

As for the outer diameter (D₁ and D₂) of a block of noodle strips (the block was round-shaped), the maximum value of the outer diameter of the block of noodle strips was measured using a caliper (manufactured by Shinwa Rules Co., Ltd., trade name: 19912), and a fraction less than 1 mm was rounded up or down.

The measurement results of the gelatinization degree of noodle, obtained above, and the condition and sensory evaluation of the block of noodle strips after drying may be shown in Table 1.

**[Table 1]**

| - | Gelatinization degree of Noodle Strip | Outer Diameter of Block of Noodle Strips after Drying (contraction degree of block of noodle strips) | Eating Texture | Unfastening at Time of Eating |
|---|---|---|---|---|
| (1) | 51.4% | 123 mm (98%) | hard | good |
| (2) | 52.5% | 123 mm (98%) | slightly hard | good |
| (3) | 51.5% | 123 mm (98%) | good | good |
| (4) | 52.0% | 123 mm (98%) | good | good |
| (5) | 59.5% | 121 mm (97%) | good | not bad |
| (6) | 68.9% | 118 mm (94%) | hard in poor unfastening portion | bad |
| (7) | 64.2% | 118 mm (94%) | hard in poor unfastening portion | bad |

As seen in the Table above, the gelatinization degree of a noodle strip can be increased by drying the noodle strip under humidity-control. It may be understood that the texture is more improved by performing humidity-control than in the case of not performing humidity-control.

In addition, when the humidity-control becomes about 53.3 kPa (400 mmHg), the degree of humidity-control may be too much, and the block noodle strips after drying tends to become too small. As a result, the unfastening at the time of eating tends to rather worsen. Furthermore, even if, as in the condition (7), humidity conditioning-control at 400 mmHg is performed only in the initial stage of drying and thereafter, drying with "no humidity-control" is performed, due to the relatively high degree of initial humidity-control, the above-described problem (deterioration of unfastening) may not be so improved. That is, the degree of humidity-control performed in the humidity-control and high-temperature hot-air drying of the present invention may be effectively from 10.7 kPa to 40.0 kPa (from 80 mmHg to 300 mmHg), preferably from 10.7 kPa to 26.7 kPa (from 80 mmHg to 200 mmHg), more preferably from 13.3 kPa to 20.0 kPa (from 100 mmHg to 150 mmHg).

Next, Comparative Test 2 was performed with regard to the timing of performing humidity -control, and the cutting strength of a noodle strip (the hardness of a noodle at the time of eating) was quantified.

Comparative tests were performed under the same conditions as in the test method of Example A1 by using, as the condition of high-temperature hot-air drying, the following 6 kinds of conditions.

### Example A2

### (6 Kinds of Conditions)

(1) (125°C, wind speed: 8 m/S, no humidity-control, 300 seconds)
(2) (125°C, wind speed: 8 m/S, no humidity-control, 60 seconds)+(125°C, wind speed: 8 m/S, humidity-control at 200 mmHg, 240 seconds)
(3) (125°C, wind speed: 8 m/S, no humidity-control, 30 seconds)+(125°C, wind speed: 8 m/S, humidity-control at 26.7 kPa (200 mmHg), 300 seconds)
(4) (125°C, wind speed: 8 m/S, humidity-control at 26.7 kPa (200 mmHg), 60 seconds) + (125°C, wind speed: 8 m/S, no humidity-control, 260 seconds)
(5) (125°C, wind speed: 8 m/S, humidity-control at (200 mmHg), 120 seconds)+(125°C, wind speed: 8 m/S, no humidity-control, 210 seconds)
(6) (125°C, wind speed: 8 m/S, humidity-control at 26.7 kPa (200 mmHg), 330 seconds)

### (Measurement of Cutting Strength of Noodle Strip)

500 ml of hot water was poured in a pot and after boiling, 80 g of a block of noodle strips sample to be measured for the cutting strength was put in the pot and boiled while unfastening the block of noodle strips with chopsticks for 3 minutes. After 3 minutes from putting-in of the block of noodle strips, the block of noodle strips was taken out from the pot and transferred to a bowl, and the measurement of the "time after hot water reconstitution" was started. At this time, a stopwatch (trade name: Seiko Stopwatch "S052", manufactured by SEIKO S-YARD Co.) was used as means for measuring the time.

After precisely counting 1 minute (60 seconds) by the stopwatch, hot water was quickly separated from the noodle strip, and the cutting strength of the noodle strip was measured by a rheometer.

### <Measurement Conditions of Cutting Strength>

Rheometer: trade name: NRM-2010-CW, manufactured by Fudo Kougyou Inc.

After placing four noodle strips on a plate, the cutting strength was measured using a piano wire, and the average value was calculated.

The measurement results of the cutting strength in comparative tests of conditions (1) to (6) are shown in the graph of Fig. 2.

The sensory results and measurement results in conditions (1) to (6) are shown in Table 2.

**[Table 2]**

| | Cutting Strength of Noodle After 1 Minute From Cooking | Sensory Evaluation at Time of Eating |
|---|---|---|
| Condition (1) | 134.7 g | hard surface, chewy |
| Condition (2) | 128.5 g | hard surface, chewy |
| Condition (3) | 130.2 g | hard surface, chewy |
| Condition (4) | 115.7 g | soft surface, good hot water reconstitution |
| Condition (5) | 114.9 g | soft surface, good hot water reconstitution |
| Condition (6) | 109.9 g | soft surface, good hot water reconstitution |

It may be understood from Fig. 2 and Table 2 that the noodle hardness differs between conditions (1), (2) and (3) and conditions (4), (5) and (6). It may be understood from Fig. 2 that when humidity-control is not performed from the initial stage of drying, the noodle becomes hard. This may be considered to occur because when high-temperature hot-air drying of raw noodle strips is performed without carrying out humidity -control, the noodle strip surface is hardened (denaturated). In this regard, in the present invention, hardening (denaturation) of the noodle strip surface can be prevented by performing humidity -control in the initial stage of drying of the high-temperature hot-air drying, as a result, the "resilient surface at the time of eating" and "excessive chewiness at the time of eating", which are defects of the conventional high-temperature hot-air dried noodle, can be overcome by the present invention.

Next, Comparative Test 3 was performed to examine the effect of addition of starch to wheat flour.

### Example A3

A comparative test on the effect of addition of starch was performed under the same conditions as in the test method of Comparative Example 1 by changing only the flour raw material in the formulation. As for the amount of water added during mixing, the amount of water added was simultaneously adjusted in accordance with the amount of starch added, and respective conditions were adjusted to afford the same degree of kneading. In addition, as for the conditions of humidity-control and high-temperature hot-air drying, hot air at a temperature of 125°C, a wind speed of 8 m/S and a humidity of 26.7 kPa (200 mmHg) was blown for 5 minutes to obtain a block of noodle strips having a final water content of around 10%.

As for the blending condition of the flour raw material, the comparative test was performed using the following 5 kinds of conditions.

### (5 Kinds of Conditions)

(1) 10 kg of wheat flour (ASW, protein content: 9.5%)
(2) 9 kg of wheat flour (ASW, protein content: 9.5%) and 1 kg of esterified tapioca starch (trade name: Sakura II, Matsutani Chemical Industry Co., Ltd.)
(3) 8 kg of wheat flour (ASW, protein content: 9.5%) and 2 kg of esterified tapioca starch (trade name: Sakura II, Matsutani Chemical Industry Co., Ltd.)
(4) 7 kg of wheat flour (ASW, protein content: 9.5%) and 3 kg of esterified tapioca starch (trade name: Sakura II, Matsutani Chemical Industry Co., Ltd.)
(5) 6 kg of wheat flour (ASW, protein content: 9.5%) and 4 kg of esterified tapioca starch (trade name: Sakura II, Matsutani Chemical Industry Co., Ltd.)

With respect to noodle strips of conditions (1) to (5), the strength of a noodle strip after drying and the gelatinization degree and sensory evaluations of a noodle strip after drying are shown in Table 3.

**[Table 3]**

| | Gelatinization Degree | Eating Texture | Aptitude for Noodle Making | Percentage of Water Added |
|---|---|---|---|---|
| Condition (1) starch: 0% | 49.5% | poor reconstitution, hard | good | 33% |
| Condition (2) starch: 10% | 51.2% | slightly hard texture | good | 38% |
| Condition (3) starch: 20% | 52.0% | good reconstitution, good texture | good | 40% |
| Condition (4) starch: 30% | 54.3% | good reconstitution, good texture | slightly bad | 42% |
| Condition (5) starch: 40% | 56.4% | good reconstitution, good texture | bad | 42% |

As seen from Table 3, the gelatinization degree can be raised by increasing the amount of starch added. In addition, the increase in the amount of starch added may result in increasing the amount of water added during mixing, and it may be considered that by the synergistic effect of starch with the amount of water added, the gelatinization degree is raised. The gelatinization degree can be effectively raised by the addition of starch, and good taste/texture at the time of eating may be obtained. When starch is not added, the taste/texture may tend to be poor.

The present invention will be more specifically described below by referring to Example B.

### <Example B1>

### Ingredients:

A flour raw material containing 800 g of wheat flour (ASW, protein content: 9.5%), 200 g of esterified tapioca starch (Sakura II, Matsutani Chemical Industry Co., Ltd.), and kneading water which is prepared by dissolving 6 g of sodium carbonate and 10 g of common salt in 400 ml of water.

### Production:

The ingredients are mixed and kneaded.

The kneaded mixture of ingredients is formed into dough-sheet.

The dough-sheet is slit into raw noodle strips by using a cutting blade (No.20, square shape), wherein the raw noodle strips have 1.4mm in thickness and 1.5mm in width.

120 g of the raw noodle strips are set into drying-retainer, wherein the drying-retainer has a diameter of 125 mm and Teflon-coated.

The raw noodle strips in drying-retainer is dried at 125°C for 5 minutes with humidity-control, wherein a wind speed of the drying is 8m/s and the humidity-control is carried out at 20.0 kPa (150 mmHg).
In the result of above process, the hot-air-dried instant noodle having around 10% in water-content is made.

### <Example B2>

### Ingredients:

A flour raw material containing 800 g of wheat flour (ASW, protein content: 9.5%), 200 g of etherified potato starch (AG600, Matsutani Chemical Industry Co., Ltd.), and kneading water which is prepared by dissolving 6 g of sodium carbonate and 10 g of common salt in 410 ml water.

### Production:

The ingredients are mixed and kneaded.

The kneaded mixture of ingredients is formed into dough-sheet.

The dough-sheet is slit into raw noodle strips by using a cutting blade (No.18, square shape), wherein the raw noodle strips have a thickness of 1.4mm and a width of 1.7mm.

120 g of the raw noodle strips are set into drying-retainer, wherein the drying-retainer has a diameter of 125 mm and Teflon-coated.

The raw noodle strips in drying-retainer is dried at 125°C for 5 minutes with humidity-control, wherein a wind speed of the drying is 8m/s and the humidity-control is carried out at 26.7 kPa (200 mmHg).
In the result of above process, the hot-air-dried instant noodle having around 10% in water-content is made.

### <Example B3>

### Ingredients:

A flour raw material containing 800 g of wheat flour (ASW, protein content: 9.5%), 200 g of etherified potato starch (AG600, Matsutani Chemical Industry Co., Ltd.), and kneading water which is prepared by dissolving 6 g of sodium carbonate and 10 g of common salt in 410 ml water.

### Production:

The ingredients are mixed and kneaded.

The kneaded mixture of ingredients is formed into dough-sheet.

The dough-sheet is slit into raw noodle strips by using a cutting blade (No.18, square shape), wherein the raw noodle strips have a thickness of 1.4mm and a width of 1.7mm.

120 g of the raw noodle strips are set into drying-retainer, wherein the drying-retainer has a diameter of 125 mm and Teflon-coated.

The raw noodle strips in drying-retainer is dried at 125°C for 3 minutes with humidity-control, wherein a wind speed of the drying is 8m/s and the humidity-control is carried out at 26.7 kPa (200 mmHg).

The semidried noodle strips is dried for 1.5 minutes in second-drying treatment, wherein the second-drying treatment is carried out at 120°C, wind-speed of 8 m/sec, and humidity of 13.3 kPa (100 mmHg).
In the result of above process, the hot-air-dried instant noodle having around 10% in water-content is made.

### <Comparative Example 1>

### Ingredients:

A flour raw material containing 1,000 g of wheat flour (ASW, protein content: 9.5%) and kneading water which is prepared by dissolving 6 g of sodium carbonate and 10 g of common salt in 320 ml water. rolled and slit into a noodle strip having a noodle thickness of 1.40 mm by means of a cutting blade No. 20 (square) and after raw noodle strips cut into a noodle weight of 120 g was shaped in a drying retainer (basket) of 125 mm in diameter and the retainer was filled, hot air at a temperature of 125°C, a wind speed of 8 m/S and a humidity of 150 mmHg was blown onto the noodle strip for 5 minutes to obtain an instant hot-air dried noodle having a final water content of around 10%.

### Production:

The ingredients are mixed and kneaded.

The kneaded mixture of ingredients is formed into dough-sheet.

The dough-sheet is slit into raw noodle strips by using a cutting blade (No.20, square shape), wherein the raw noodle strips have 1.4mm in thickness and 1.5mm in width.

120 g of the raw noodle strips are set into drying-retainer, wherein the drying-retainer has a diameter of 125 mm and Teflon-coated.

The raw noodle strips in drying-retainer is dried at 125°C for 5 minutes with humidity-control, wherein a wind speed of the drying is 8m/s and the humidity-control is carried out at 20.0 kPa (150 mmHg).
In the result of above process, the hot-air-dried instant noodle having around 10% in water-content is made.

### <Comparative Example 2>

The same hot-air-dried instant noodle was obtained by changing the humidity of 20.0 kPa (150 mmHg) as the drying condition of Example B1 to a humidity of 53.3 kPa (400 mmHg), with other conditions being the same as in Example B1.

### <Comparative Example 3>

The same hot-air-dried instant noodle was obtained by changing the humidity of 26.7 kPa (200 mmHg) as the drying condition of Example B2 to a humidity of 6.67 kPa (50 mmHg), with other conditions being the same as in Example B2.

The hot-air-dried instant noodles obtained in Examples B1 to B3 and Comparative Examples 1 to 3 were subjected to the following evaluations. The obtained results are shown in Table 4 below.

**[Table 4]**

| | Degree of Contraction of Block of Noodle Strips After Drying | Eating Texture |
|---|---|---|
| Example B1 | good | Surface is not resilient and both hot water reconstitution and texture are good. |
| Example B2 | good | Surface is not resilient and both hot water reconstitution and texture are good. |
| Example B3 | good | Surface is not resilient and both hot water reconstitution and texture are good. |
| Comparative Example 1 | good | Hot water reconstitution is bad and texture is powdery. |
| Comparative Example 2 | large contraction | Unfastening is bad and texture is rubbery. |
| Comparative Example 3 | good | Surface is resilient and texture is hard. |

As seen from the results above, in the case of using wheat flower and starch as the main raw material and drying raw noodle strips with high-temperature hot air in a short time, when high-temperature hot-air drying is performed under humidity-control from the initial stage of drying, hardening (denaturation) of a noodle strip surface can be prevented at the same time. In addition, a noodle exhibiting good hot water reconstitution at the time of eating and moreover, succeeding in solving sensory problems of the conventional hot-air dried noodle, i.e., "resilient surface of noodle strip" and "excessive chewiness" at the time of eating, can be obtained.

That is, in the present invention, as regards a hot-air-dried instant noodle obtained through shaping, filling and high-temperature hot-air drying without steam-cooking raw noodle strips, the hot air at the time of high-temperature hot-air drying may be used by adjusting the humidity to 10.7 kPa to 40.0 kPa (80 mmHg to 300 mmHg) and the temperature to 110 to 150°C, whereby the noodle strip surface can be prevented from hardening (denaturation). In addition, a noodle exhibiting good hot water reconstitution at the time of eating and moreover, succeeding in solving sensory problems of the conventional hot-air dried noodle, such as "resilient surface of noodle strip" and "excessive chewiness" at the time of eating, can be obtained. Furthermore, by the addition of starch, the gelatinization of a noodle strip at the time of high-temperature hot-air drying can be effectively enhanced. As a result, a hot-air-dried instant noodle excellent in the taste/texture can be obtained.

## Claims

1. A process for producing hot-air-dried instant noodle, comprising:
producing raw noodle strips from a main raw material containing at least wheat flour and starch;
putting the raw noodle strips in a drying retainer, without steam-cooking the raw noodle strips; and
drying the raw noodle strips by using hot air at a temperature range from 110 to 150 °C with humidity-control, wherein the humidity-control is carried out at an absolute humidity from 10.7 kPa to 40.0 kPa (from 80 mmHg to 300 mmHg).

2. The process for producing hot-air-dried instant noodle according to claim 1, wherein the difference (α_{W}-α_{D}) between gelatinization degrees α_{W} and α_{D} is in a range from 0.1 % to 15 %,
wherein the α_{W} is a gelatinization degree which is measured from a block of noodle strips which is dried the raw noodle strips by using hot air at a temperature range from 110 to 150 °C with humidity-control, wherein the humidity-control is carried out at an absolute humidity from 10.7 kPa to 40.0 kPa (from 80 mmHg to 300 mmHg); and
the α_{D} is a gelatinization degree which is measured from a block of noodle strips which is dried the raw noodle strips by using hot air at a temperature range from 110 to 150 °C without humidity-control.

3. The process for producing hot-air-dried instant noodle according to claim 1 or 2, wherein the starch is blended in a ratio of 10 to 35 mass% in the main raw material.

4. The process for producing hot-air-dried instant noodle according to any one of claims 1 to 3, wherein the wheat flour and the starch are first subjected to a mixing treatment, and water is added in a ratio of 35 to 45 % of the total amount of the wheat flour and the starch, at the time of the mixing treatment.

5. The process for producing hot-air-dried instant noodle according to any one of claims 1 to 4, wherein a second drying treatment is conducted by using hot air at a temperature range from 80 to 120 °C with a second humidity-control, wherein the second humidity-control is carried out at an absolute humidity from 1.3 kPa to 13.3 kPa (from 10 mmHg to 100 mmHg).

6. The process for producing hot-air-dried instant noodle according to any one of claims 1 to 5, wherein the starch is selected from raw starches of a sweet potato starch, a tapioca starch, a potato starch, and a waxy corn starch; or from etherified and esterified starches which have been derived from these raw starches as a raw material therefor.

## Patentansprüche

1. Verfahren zur Herstellung von heißluftgetrockneter Instant-Nudel, umfassend:
Herstellen von Rohnudelstreifen aus einem Hauptrohmaterial, das mindestens Weizenmehl und Stärke enthält;
Einlegen der Rohnudelstreifen in einen Trocknungsbehälter ohne Dampfgaren der Rohnudelstreifen; und
Trocknen der Rohnudelstreifen unter Verwendung von heißer Luft in einem Temperaturbereich von 110 bis 150°C mit Feuchtigkeitskontrolle, wobei die Feuchtigkeitskontrolle bei einer absoluten Feuchtigkeit von 10,7 kPa bis 40,0 kPa (von 80 mmHg bis 300 mmHg) durchgeführt wird.

2. Verfahren zur Herstellung von heißluftgetrockneter Instant-Nudel nach Anspruch 1, wobei der Unterschied (α_{W}-α_{D}) zwischen den Gelatinierungsgraden α_{W} und α_{D} in einem Bereich von 0,1% bis 15% liegt,
wobei α_{W} ein Gelatinierungsgrad ist, der von einem Block aus Nudelstreifen bestimmt wird, der die Rohnudelstreifen getrocknet unter Verwendung von heißer Luft in einem Temperaturbereich von 110 bis 150°C mit Feuchtigkeitskontrolle ist, wobei die Feuchtigkeitskontrolle bei einer absoluten Feuchtigkeit von 10,7 kPa bis 40,0 kPa (von 80 mmHg bis 300 mmHg) durchgeführt wird; und
α_{D} ein Gelatinierungsgrad ist, der von einem Block aus Nudelstreifen bestimmt wird, der die Rohnudelstreifen getrocknet unter Verwendung von heißer Luft in einem Temperaturbereich von 110 bis 150°C ohne Feuchtigkeitskontrolle ist.

3. Verfahren zur Herstellung von heißluftgetrockneter Instant-Nudel nach Anspruch 1 oder 2, wobei die Stärke in einem Verhältnis von 10 bis 35 Gew.-% in das Hauptrohmaterial eingemischt wird.

4. Verfahren zur Herstellung von heißluftgetrockneter Instant-Nudel nach einem der Ansprüche 1 bis 3, wobei das Weizenmehl und die Stärke zuerst einer Mischbehandlung unterzogen werden und Wasser zum Zeitpunkt der Mischbehandlung in einem Verhältnis von 35 bis 45% der Gesamtmenge des Weizenmehls und der Stärke zugegeben wird.

5. Verfahren zur Herstellung von heißluftgetrockneter Instant-Nudel nach einem der Ansprüche 1 bis 4, wobei eine zweite Trocknungsbehandlung unter Verwendung von heißer Luft in einem Temperaturbereich von 80 bis 120°C mit einer zweiten Feuchtigkeitskontrolle durchgeführt wird, wobei die zweite Feuchtigkeitskontrolle bei einer absoluten Feuchtigkeit von 1,3 kPa bis 13,3 kPa (von 10 mmHg bis 100 mmHg) durchgeführt wird.

6. Verfahren zur Herstellung von heißluftgetrockneter Instant-Nudel nach einem der Ansprüche 1 bis 5, wobei die Stärke ausgewählt ist aus Rohstärken von Süßkartoffelstärke, Tapiokastärke, Kartoffelstärke und Wachsmaisstärke; oder aus veretherten und veresterten Stärken, die aus diesen Rohstärken als Rohmaterial dafür gewonnen wurden.

## Revendications

1. Procédé de fabrication de nouilles instantanées séchées à l'air chaud, comprenant les étapes suivantes :
fabriquer des bandes de nouilles crues à partir d'une matière première principale contenant au moins de la farine de blé et de l'amidon ;
mettre les bandes de nouilles crues dans un rétenteur de séchage, sans faire cuire à la vapeur les bandes de nouilles crues ; et
sécher les bandes de nouilles crues en utilisant de l'air chaud à une température comprise entre 110 et 150 °C avec un contrôle de l'humidité, le contrôle de l'humidité étant exécuté à une humidité absolue comprise entre 10,7 kPa et 40,0 kPa (entre 80 mmHg et 300 mmHg).

2. Procédé de fabrication de nouilles instantanées séchées à l'air chaud selon la revendication 1, où la différence (α_{W} - α_{D}) entre les degrés de gélatinisation (α_{W} et α_{D} est comprise entre 0,1 % et 15 %,
où α_{W} est un degré de gélatinisation qui est mesuré à partir d'un bloc de bandes de nouilles qui est séché en utilisant de l'air chaud dont la température est comprise entre 110 et 150 °C, avec contrôle de l'humidité, le contrôle de l'humidité étant exécuté à une humidité absolue comprise entre 10,7 kPa et 40,0 kPa (entre 80 mmHg et 300 mmHg) ; et
α_{D} est un degré de gélatinisation qui est mesuré à partir d'un bloc de bandes de nouilles qui est séché en utilisant de l'air chaud dont la température est comprise entre 110 et 150 °C, sans contrôle de l'humidité.

3. Procédé de fabrication de nouilles instantanées séchées à l'air chaud selon la revendication 1 ou 2, où l'amidon est mélangé dans un rapport compris entre 10 et 35 % en masse dans la matière première principale.

4. Procédé de fabrication de nouilles instantanées séchées à l'air chaud selon l'une quelconque des revendications 1 à 3, où la farine de blé et l'amidon sont d'abord soumis à un traitement de mélange, et de l'eau est ajoutée dans un rapport compris entre 35 et 45 % de la quantité totale de farine de blé et d'amidon, au moment du traitement de mélange.

5. Procédé de fabrication de nouilles instantanées séchées à l'air chaud selon l'une quelconque des revendications 1 à 4, où un second traitement de séchage est exécuté en utilisant de l'air chaud dont la température est comprise entre 80 et 120 °C, avec un second contrôle de l'humidité, le second contrôle de l'humidité étant exécuté à une humidité absolue comprise entre 1,3 kPa et 13,3 kPa (entre 10 mmHg et 100 mmHg).

6. Procédé de fabrication de nouilles instantanées séchées à l'air chaud selon l'une quelconque des revendications 1 à 5, où l'amidon est sélectionné parmi des amidons naturels de patate douce, de tapioca, de fécule de pommes de terre, et de fécule de maïs cireux ; ou à partir d'amidons éthérifiés et estérifiés qui ont été obtenus à cette fin à partir de ces amidons en tant que matière première.
